# FASCICULE DE BREVET EUROPEEN

(11) **EP 4 385 933 B1**
(45) Date de publication et mention de la délivrance du brevet: **20.11.2024**
(21) Numéro de dépôt: 23199929.3
(22) Date de dépôt: 27.09.2023
(51) Int. Cl.: B66D 1/58

(54) **PROCEDE DE PROTECTION D'UN ORGANE DE LEVAGE CONTRE UNE SURCHARGE ET DISPOSITIF METTANT EN OEUVRE CE PROCEDE**
VERFAHREN ZUM SCHUTZ EINES HEBEZEUGES GEGEN ÜBERLAST UND VORRICHTUNG ZUR DURCHFÜHRUNG DES VERFAHRENS
METHOD FOR PROTECTING A LIFTING MEMBER AGAINST OVERLOAD AND DEVICE IMPLEMENTING SAID METHOD

(30) Priorité: 16.12.2022 FR 2213548
(43) Date de publication de la demande: 19.06.2024
(73) Titulaire: REEL, 69450 Saint-Cyr au Mont d'Or (FR)
(72) Inventeur: THUBET, Thomas, 13270 FOS-SUR-MER (FR); DECREUSEFOND, Sébastien, 13330 PELISSANNE (FR)
(74) Mandataire: Cabinet Laurent & Charras

(56) Documents cités:
- WO-A1-2008/088220
- WO-A1-2022/221751

## Description

### DOMAINE DE L'INVENTION

La présente invention se rapporte au domaine technique des organes de levage, et plus particulièrement des treuils, et encore plus spécifiquement des treuils embarqués sur des aéronefs et notamment des hélicoptères.

### ART ANTERIEUR DE LA TECHNIQUE

Un treuil est traditionnellement constitué d'au moins un tambour, également dénommé tambour de levage, associé à une cinématique assurant la rotation du tambour sur lui-même, afin de permettre l'enroulement et le déroulement d'un câble de levage, à l'extrémité duquel est fixée une charge.

L'une des problématiques auxquelles se heurte l'utilisation d'un tel treuil réside dans la sécurité à conférer au treuil et à la cinématique associée en cas de surcharge. Une telle surcharge peut résulter, notamment lorsque le treuil est embarqué sur un hélicoptère, de la chute d'un opérateur lié au treuil par le câble, de la prise de l'extrémité libre du câble de levage à un point fixe quelconque type arbre, pylône, etc.

En l'absence d'un dispositif de sécurité adapté, cette occurrence est susceptible d'affecter directement l'intégrité dudit opérateur, et/ou l'intégrité de l'hélicoptère et notamment d'engendrer sa chute avec les conséquences dramatiques associées.

On connaît de tels dispositifs de sécurité qui induisent, en cas de détection du dépassement d'une charge limite, le déroulement du câble. Ces dispositifs font traditionnellement appel à un système d'embrayage à friction, constitué d'un ou de plusieurs disques de friction et d'un ressort, ledit ressort étant taré à une valeur correspondant à la masse limite ou charge limite au-delà de laquelle on souhaite engendrer le déroulement du câble.

Ce faisant, lorsque la charge limite est atteinte, le ou les disques de friction n'adhèrent plus, par exemple au tambour, libérant la rotation de celui-ci et corollairement le déroulement du câble, avec en première approximation l'absence de forces de frottement autres que les simples forces de frottement de l'axe du tambour sur les roulements qui le reçoivent. Ainsi donc, aussi longtemps que la charge est supérieure à la valeur de tarage du ressort, la chaîne cinématique est libre. En revanche, lorsque le couple s'exerçant sur le tambour diminue, notamment en dessous du seuil défini par le tarage du ou des ressorts, l'adhérence du ou des disques de friction, qui existe toujours, revient et permet d'amortir, voire d'arrêter la chute de la charge.

Si un tel système permet d'assurer une certaine protection en cas de surcharge, la mise en oeuvre d'un embrayage à friction est relativement sensible et complexe, et nécessite des contrôles périodiques afin d'assurer son bon fonctionnement en fonction de la charge limite que l'on souhaite imposer au système.

Ainsi, outre qu'un tel système manque de précision en termes de seuil de déclenchement en raison de la mise en oeuvre de garnitures, d'environnement et de principe de fonctionnement, un défaut de tarage du ou des ressorts peut engendrer le risque de laisser tomber la charge librement, voire de ne pas se déclencher en cas de surcharge. Le contrôle de tels ressorts est donc déterminant pour optimiser la sécurité.

Par ailleurs, en raison du mode de fonctionnement d'un tel système, en cas de surcharge, la rupture de la chaîne cinématique peut entraîner le déroulement complet du câble sans pouvoir s'y opposer. Ce faisant, un tel système s'avère inefficace pour conserver l'intégrité d'un opérateur lié au treuil en cas de chute, ce dernier pouvant être sévèrement affecté en fin de course du déroulement du câble résultant de la décélération brutale de ladite chute, voire en cas de choc dudit opérateur avec le sol. WO 2008/088220 A1 divulgue un procédé de protection d'un organe de levage contre une surcharge, l'organe de levage comprenant un tambour de levage sur lequel vient s'enrouler un câble à l'extrémité duquel est fixée une charge, ledit tambour de levage étant lié mécaniquement à un moteur apte à assurer sa rotation, la liaison mécanique comprenant un embrayage ou dispositif équivalent, ledit procédé comprenant:- un premier seuil de fonctionnement, dont le dépassement engendre le fonctionnement en roue libre du tambour de levage par rapport à la chaîne cinématique émanant du moteur. Ce document divulgue le préambule de la revendication 5.

L'un des objectifs de la présente invention est de proposer un système plus fiable en termes de sécurité, en termes de réglage du seuil de déclenchement en cas de surcharge et également en termes de modularité dudit seuil de déclenchement du système en fonction des conditions d'opération du treuil et corollairement de l'hélicoptère au sein duquel ledit treuil est embarqué.

### EXPOSE DE L'INVENTION

A cet effet, l'invention concerne tout d'abord un procédé de protection d'un organe de levage contre une surcharge, l'organe de levage comprenant un tambour de levage sur lequel vient s'enrouler un câble à l'extrémité duquel est fixée une charge, ledit tambour étant lié mécaniquement à un moteur électrique, notamment par un embrayage ou dispositif équivalent.

Ce procédé comprend au moins deux seuils distincts de fonctionnement :
▪ un premier seuil, dont le dépassement engendre le fonctionnement en roue libre du tambour de levage par rapport à la chaîne cinématique émanant du moteur ;
▪ un second seuil, de valeur supérieure à celle correspondant à la charge nominale de l'organe de levage, mais de valeur inférieure à celle du premier seuil, engendrant le freinage de la rotation du tambour de levage et une tentative d'arrêt progressif de ladite rotation du tambour.

En d'autres termes et selon un premier aspect de l'invention, le procédé consiste tout d'abord à permettre une libre rotation du tambour selon le principe de la roue libre après le déclenchement du premier seuil, c'est-à-dire, lorsqu'un couple supérieur à une valeur déterminée s'exerce sur le tambour par le câble, puis, après déroulement en roue libre d'une partie du câble en raison de la surcharge ainsi exercée, à tenter un ralentissement voire l'arrêt de cette libre rotation du tambour de par l'effet du deuxième seuil, pour ainsi s'opposer au déroulement complet du câble dans l'éventualité de l'occurrence d'une surcharge.

Selon une caractéristique avantageuse de l'invention, le procédé consiste corollairement à tenter le ré-accouplement du tambour de levage sur la chaîne cinématique, et alternativement, lorsque la tentative d'arrêt de cette libre rotation n'est pas possible en raison, par exemple de la prise de l'extrémité du câble dans un point fixe, à octroyer à l'opérateur de l'organe de levage le temps suffisant pour éventuellement prendre la décision de provoquer le sectionnement dudit câble.

Ainsi, et selon l'invention, le procédé consiste, après exercice d'un couple sur le tambour de levage supérieur ou égal audit premier seuil, et lorsque le ralentissement sinon l'arrêt de la rotation du tambour n'est pas possible, notamment en raison de la persistance dudit couple exercé sur le tambour au-delà dudit premier seuil, à engendrer un réenclenchement automatique de l'embrayage ou du dispositif équivalent selon une périodicité déterminée, et en l'espèce inférieure ou égale à 5 secondes, propre à re-accoupler mécaniquement le tambour de levage et le moteur électrique. Typiquement si nonobstant cette tentative de réenclenchement, le couple demeure supérieur audit premier seuil, la libre rotation du tambour par rapport à la chaîne cinématique est à nouveau activée.

L'invention concerne également un procédé de protection d'un organe de levage contre une surcharge, dans lequel l'organe de levage est constitué d'un tambour à cabestan associé à un tambour de stockage du câble. Le procédé de l'invention, dans une telle configuration est identique à celui précédemment exposé, le tambour de stockage étant alors muni de freins, aptes à assurer la tension résiduelle minimum entre le tambour de stockage et le cabestan afin de permettre le fonctionnement correct de l'organe de levage.

L'invention concerne enfin un dispositif de protection de l'organe de levage contre une surcharge afin de permettre le fonctionnement dudit organe de levage selon le procédé exposé ci-dessus.

L'organe de levage comprend :
▪ un tambour de levage sur lequel vient s'enrouler un câble de levage à l'extrémité duquel est fixée une charge ;
▪ un moteur muni d'un arbre rotatif, apte à entraîner en rotation le tambour de levage ;
▪ un embrayage ou dispositif équivalent monté sur la liaison mécanique reliant le moteur au tambour de levage et apte à découpler l'arbre rotatif du moteur et le tambour.

Selon l'invention, l'embrayage ou dispositif équivalent est pourvu d'éléments aptes à assurer la libre rotation du tambour par rapport à l'arbre moteur dès lors que le couple exercé par le câble de levage sur le tambour est supérieur à une valeur-seuil prédéterminée - correspondant au premier seuil ; l'organe de levage est en outre muni de moyens aptes à engendrer le ralentissement, voire l'arrêt de la rotation du tambour de levage après mise en libre rotation de ce dernier, de telle sorte à permettre le réaccouplement de l'arbre rotatif du moteur sur le tambour de levage.

Typiquement, ces moyens sont constitués de freins, agissant sur le tambour de levage, et dont les capacités maximales de freinage correspondent audit second seuil.

Selon l'invention, l'embrayage ou dispositif équivalent est constitué d'une cartouche, dite de surcharge, amovible, susceptible d'être couplée respectivement à l'arbre moteur et au tambour de levage. Cette cartouche est constituée d'une cloche recevant deux couronnes indépendantes l'une de l'autre. Ces couronnes coopèrent l'une avec l'autre par l'intermédiaire d'une pluralité de billes reçues dans des logements de forme adaptée de l'une desdites couronnes et faisant saillie hors desdits logements afin d'être également reçues dans des lumières traversantes ménagées au sein de l'autre couronne, des ressorts, avantageusement ménagés au sein d'une cage, exerçant une pression sur lesdites billes, l'ensemble définissant ainsi ledit premier seuil. L'une desdites couronnes est solidaire de la cloche, elle-même connectée mécaniquement à l'arbre moteur, et l'autre couronne est solidaire d'un moyen apte à entraîner en rotation le tambour de levage

Selon une caractéristique avantageuse de l'invention, les logements ménagés au sein de l'une des couronnes et destinés à recevoir les billes, communiquent avec une gorge annulaire interne ménagée au sein de ladite couronne, de profondeur inférieure auxdits logements, cette communication étant réalisée au moyen de rampes non radiales.

Par ailleurs, selon l'invention, le dispositif de l'invention comprend également des moyens de freinage supplémentaires, en l'espèce constitués de disques à friction, susceptibles de coopérer avec un organe solidaire de ladite couronne liée mécaniquement avec le tambour de levage, la limite supérieure d'action desdits freins constituant ledit second seuil.

### BREVE DESCRIPTION DES FIGURES

La manière dont l'invention peut être réalisée, les avantages qui en découlent ressortiront mieux de l'exemple de réalisation qui suit, donné à titre indicatif et non limitatif à l'appui des figures annexées.
La figure 1 est une représentation schématique illustrant le principe de fonctionnement du procédé et du dispositif conforme à l'invention, en position opérationnelle normale dans le cadre d'un organe de levage constitué d'un cabestan.
La figure 2 est une vue analogue à la figure 1 illustrant le fonctionnement du procédé et du dispositif de l'invention en mode de surcharge inférieure audit premier seuil.
La figure 3 est une vue analogue à la figure 1 illustrant le fonctionnement du procédé et du dispositif de l'invention en mode de surcharge supérieure audit premier seuil.
La figure 4 est un graphe illustrant en fonction du temps (abscisses) et de la charge (en kg) (en ordonnées) appliquée sur l'organe de levage intégrant le dispositif de l'invention les différents modes de fonctionnement dudit dispositif.
La figure 5 est une représentation schématique en perspective de l'un des éléments du dispositif de prévention d'une surcharge conforme à l'invention.
La figure 6 est une représentation schématique en perspective de la cloche mise en oeuvre dans l'élément de la figure 5.
La figure 7 est une vue analogue à la figure 6 selon un autre angle de vue.
La figure 8 est une représentation schématique en perspective de l'une des couronnes entrant dans la constitution de l'élément de la figure 5, destinée à venir se positionner au fond de la cloche représentée dans les figures 6 et 7.
La figure 9 est une représentation schématique en perspective de la couronne antagoniste destinée à coopérer avec la couronne de la figure 8, en outre associée au moyen de connexion amovible sur l'arbre moteur.
La figure 10 est une représentation schématique illustrant l'élément de la figure 5 en fonctionnement normal, c'est-à-dire en l'absence de surcharge.
La figure 11 est une vue analogue à la figure 10, illustrant le dispositif de l'invention en mode de surcharge supérieure audit premier seuil.
La figure 12 est une représentation schématique en perspective éclatée de l'ensemble du dispositif de l'invention.
La figure 13 est une vue en section de la coopération entre les deux couronnes antagonistes des figures 8 et 9, en mode de fonctionnement normal du dispositif de l'invention.
La figure 14 est une vue analogue à la figure 13 en mode de surcharge supérieure audit premier seuil.
La figure 15 est une représentation schématique partiellement éclatée du dispositif de freinage associé au tambour de levage de l'organe de levage de l'invention.

### DESCRIPTION DETAILLEE DE L'INVENTION

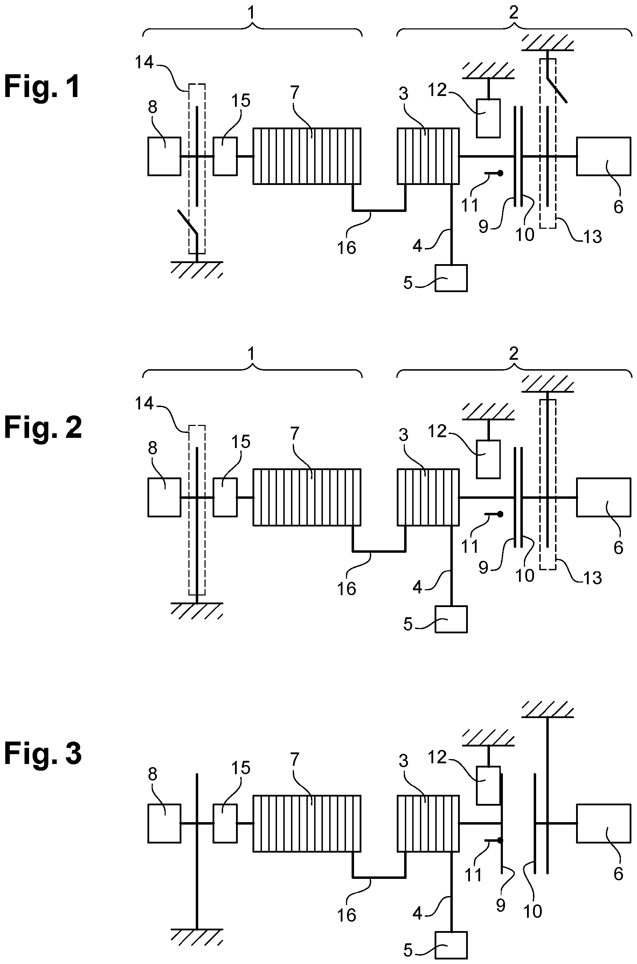

On a représenté au sein des figures 1 à 3 le principe général de fonctionnement du procédé de détection de surcharge conforme à l'invention.

Au sein de celles-ci, le dispositif de l'invention est intégré au sein d'un treuil, et en l'espèce, d'un treuil à cabestan. Il doit cependant être entendu que dans l'esprit de l'invention, le dispositif est susceptible de fonctionner avec un treuil classique, c'est-à-dire dont le tambour de levage assure également le stockage.

Ainsi, au sein de ces figures, on distingue schématiquement l'ensemble de levage (1) et l'ensemble de stockage (2).

L'ensemble de levage (1) est constitué d'un tambour (3) dit de cabestan, assurant l'enroulement et le déroulement d'un câble (4), à l'extrémité duquel est fixée une charge (5). Le tambour (3) est mû en rotation sous l'action d'un moteur électrique (6). Si dans l'exemple décrit, un seul tambour de cabestan est illustré, l'invention vise également la mise en oeuvre d'un cabestan comprenant deux tambours montés parallèlement l'un à l'autre, chacun desdits tambours ne recevant qu'une seule couche de spires de câble à sa périphérie.

Corollairement, apparaît au niveau de l'ensemble de stockage (2), un tambour de stockage (7), sur lequel sont stockés plusieurs épaisseurs de spires du câble provenant du ou des tambours de cabestan (3), ledit tambour de stockage (7) étant mû en rotation par un moteur électrique (8).

On a schématisé sur les figures 1 à 3, deux éléments de couplage (9, 10) de la liaison mécanique entre le moteur électrique (6) et le cabestan (3), respectivement en position de couplage effectif au sein des figures 1 et 2, c'est-à-dire en fonctionnement normal du dispositif et en cas de surcharge inférieure à un premier seuil, et en position découplée au sein de la figure 3, c'est-à-dire en cas de détection de surcharge supérieure audit premier seuil.

Ces organes de couplage seront décrits en détail ultérieurement. Ils sont cependant ainsi conçus pour que, lorsqu'une surcharge est détectée, c'est-à-dire lorsqu'un couple d'une valeur supérieure à une valeur seuil (le premier seuil) s'exerce sur le cabestan (3) sous l'action du câble (4), lesdits organes (9, 10) se désaccouplent à l'instar d'un embrayage, en suite d'un déplacement axial de l'un desdits organes par rapport à l'autre. Dans cette hypothèse, l'organe de couplage (9) solidaire du cabestan (3) active automatiquement un interrupteur (11) (illustré schématiquement au contact dudit organe de couplage (9) sur la figure 3).

La figure 1 illustre, comme déjà indiqué, le fonctionnement normal de l'organe de levage, c'est-à-dire en l'absence de toute surcharge. Dans cette configuration, on peut observer que les deux organes de couplage (9) et (10) sont schématiquement en contact l'un de l'autre, en d'autres termes, qu'il y a accouplement entre la chaine cinématique et le tambour du cabestan (3). Corollairement, le frein de service (non représenté) associé au moteur électrique (6) permet à l'organe de levage d'être soumis à une charge utile supérieure à la charge nominale déterminée par le constructeur, mais bien évidemment inférieure audit premier seuil.

La figure 2 illustre un mode de fonctionnement intermédiaire, selon lequel une surcharge est détectée, toujours inférieure audit premier seuil, mais cependant supérieure à la charge utile évoquée précédemment. Ce mode de fonctionnement est réputé intervenir postérieurement à la détection d'une surcharge supérieure audit premier seuil, dans l'objectif de permettre, ainsi qu'il sera décrit ultérieurement, le réarmement ou réaccouplement de la chaine cinématique sur le tambour de cabestan (3).

Enfin, la figure 3 illustre le mode de fonctionnement selon lequel une surcharge supérieure audit premier seuil est détectée. Une telle surcharge peut, par exemple, résulter de la chute d'un opérateur relié au câble (4), ou encore de la prise de l'extrémité dudit câble, munie ou non d'une charge, dans un point fixe, du type pylône, arbre, etc....

Dans une telle configuration, on souhaite que le tambour du cabestan (3) puisse tourner librement, et à cet effet, la chaine cinématique liant le moteur (6) au cabestan (3) est désaccouplée. Ce désaccouplement se traduit par un déplacement axial de l'un des organes d'accouplement (9, 10), et en l'espèce de l'organe (9), qui, en raison de ce déplacement, active l'interrupteur (11).

Cette activation de l'interrupteur (11) engendre l'arrêt de la rotation du moteur électrique (6) au moyen d'une roue à rochet (13) (mieux connue sous l'expression anglo-saxonne *« ratchet* »), et plus spécifiquement la rotation inhérente à l'inertie, puisque dans les faits, l'activation dudit interrupteur engendre en premier lieu l'arrêt de l'alimentation électrique dudit moteur (6).

En outre, l'activation de l'interrupteur (11) engendre également l'arrêt de l'alimentation électrique du moteur électrique (8), outre la fermeture de la roue à rochet (14).

Corollairement, en raison de la nature du treuil décrit, en l'espèce à cabestan, il convient de conserver une tension résiduelle sur le brin de câble (16) s'étendant entre le cabestan (3) et le tambour de stockage (7). A cet effet, des organes de freinage (15), typiquement constitués de disques de friction, coopèrent avec le tambour de stockage (7), pour limiter son libre déroulement.

En cas de détection d'une surcharge sur le cabestan (3) supérieure audit premier seuil (figure 3), le cabestan (3) est non seulement découplé du moteur d'entraînement (6), mais fonctionne alors vis-à-vis de ce dernier à l'instar d'une roue libre, permettant le libre déroulement du câble en fonction du besoin. Les freins (15) agissant sur le tambour de stockage (7) exerçant une action de freinage très inférieure à la surcharge en question, ne sont pas de nature à affecter la libre rotation dudit tambour de stockage, et donc corollairement au libre déroulement du câble.

L'organe de levage de l'invention est ainsi conçu pour que la libre rotation du cabestan (3) consécutivement à la détection d'une surcharge supérieure audit premier seuil est limitée dans le temps. Cette libre rotation entraine de fait l'absence ou quasi-absence de couple exercé sur le tambour de levage ou le cabestan (3). Comme évoqué en préambule, on tente, après cette diminution drastique du couple de ralentir, voire d'arrêter cette libre rotation du tambour, pour ainsi s'opposer au déroulement complet du câble, et alternativement, lorsque la tentative d'arrêt de cette libre rotation n'est pas possible en raison, par exemple de la prise de l'extrémité du câble dans un point fixe, de permettre à l'opérateur de sectionner le câble.

A cet effet, les freins (12) associés au tambour de levage ou au cabestan définissent un second seuil, et tentent d'aboutir au ralentissement ou à l'arrêt souhaité dudit tambour de levage. Corollairement, le dispositif de l'invention engendre le réaccouplement des organe (9, 10), afin d'embrayer le tambour de levage sur le moteur (6), et ainsi reprendre un fonctionnement normal de l'organe de levage. Si cependant, l'évènement à l'origine de la surcharge persiste, lesdits organes (9, 10) sont à nouveau désaccouplés, engendrant à nouveau la libre rotation du tambour de levage ou cabestan.

Typiquement, si la vitesse de rotation du moteur redevient supérieure ou égale à celle de déroulement du câble, et ce consécutivement à une tentative réussie de réaccouplement des deux organes de couplage (9, 10), l'organe de levage retourne à son fonctionnement normal.

Si en revanche, cette tentative de réaccouplement échoue, en raison du maintien du couple exercé sur la cabestan (3) supérieur au premier seuil, par exemple en raison de la prise de l'extrémité du câble dans un point fixe type pylône ou arbre, le déroulement en roue libre se poursuit, et après nouvelle tentative de réaccouplement infructueuse, l'opérateur peut alors prendre la décision de sectionner le câble, afin notamment de ne pas impacter l'intégrité de l'hélicoptère au sein duquel l'organe de levage est embarqué.

Dans l'exemple de réalisation décrit, ces tentatives de réaccouplement des deux organes de couplage (9) et (10) interviennent toutes les 4 ou 5 secondes.

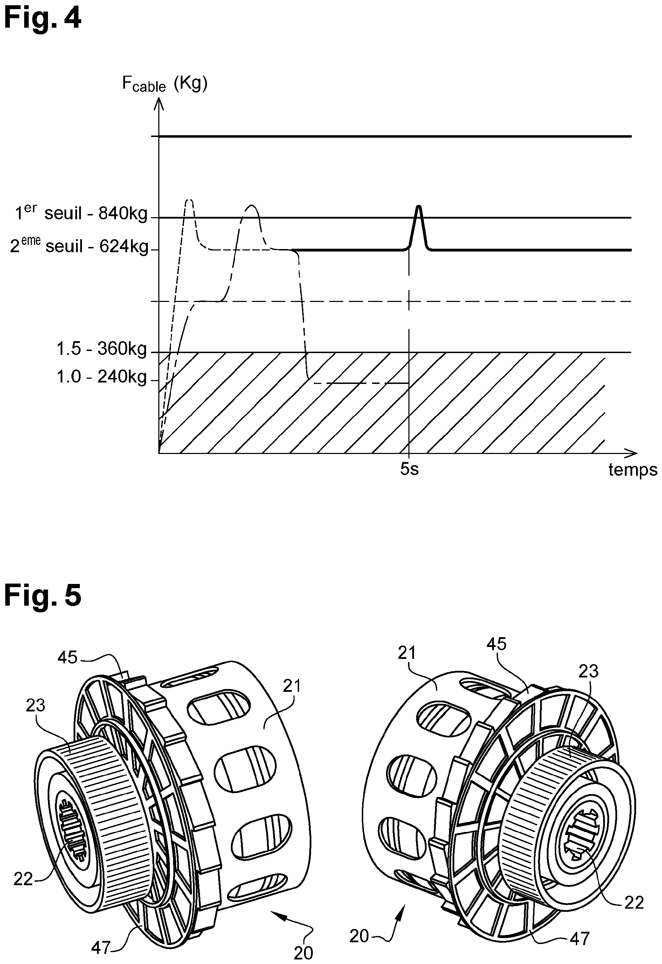

On a représenté en relation avec la figure 4 un graphe illustrant en fonction du temps (abscisses) et de la charge (en kg) (en ordonnées) les différents modes de fonctionnement de l'organe de levage conforme à l'invention, en l'espèce, pour une charge nominale de 240 kg par exemple.

On a représenté au sein de ce graphe :
▪ ledit premier seuil, en l'espèce fixé à 3,5 fois la charge nominale, soit 840 kg ;
▪ ledit second seuil, en l'espèce fixé à 2,6 fois la charge nominale, soit environ 624 kg.

Au sein de ce graphe, la courbe en traits réguliers discontinus (la plus à gauche sur la figure) illustre l'application d'une surcharge brutale ou soudaine, typiquement résultant de la chute d'un opérateur fixé à l'extrémité libre du câble, ou consécutif à un mou de câble qui se poursuit par une tension brutale dudit câble, et en tout cas dépassant ledit premier seuil. Ce faisant, le dispositif de l'invention induit quasiment immédiatement le fonctionnement du cabestan (3) en mode roue libre, se traduisant sur ladite courbe pas une inflexion et l'abaissement de la valeur de la charge détectée jusqu'à atteindre le niveau dudit second seuil, correspondant à l'activation des freins (12) sur le cabestan.

A ce moment :
- soit l'action des freins est suffisante pour engendrer le ralentissement effectif de la rotation du tambour de levage ou cabestan, et corollairement le réaccouplement durable des organes de couplage (9, 10), et donc de la chaine cinématique sur ledit cabestan, et l'on retourne alors en mode de fonctionnement normal de l'organe de levage, se traduisant par une nouvelle inflexion de la courbe en direction du bas,
- soit la surcharge persiste, et lesdits organes (9, 10) sont une nouvelle fois désaccouplés, se traduisant sur la courbe par une nouvelle ascension puis inflexion vers le bas (trait continu sur la figure), résultant du nouveau mode de fonctionnement en roue libre du tambour de levage ou cabestan. Une nouvelle fois, les freins (15) vont tenter un ralentissement de la rotation du tambour de levage ou cabestan, et corollairement un réaccouplement des organes (9, 10), et si cette nouvelle tentative échoue pour les raisons évoquées précédemment, l'opérateur ayant disposé d'une durée suffisante, typiquement 10 secondes pour prendre une décision, peut décider de sectionner le câble.

La courbe en traits discontinus et irréguliers illustre une surcharge progressive, susceptible de résulter de la prise de l'extrémité du câble dans un pylône, arbre, etc. Si cela se produit, lorsque cette charge atteint ledit second seuil, le système de freinage (15) tente de freiner et de réduire la charge alors appliquée sur le tambour de levage ou cabestan. Si ce freinage est suffisant, la courbe redescend en mode de fonctionnement normal. Si cependant, ce freinage est insuffisant, et que la charge augmente encore et dépasse ledit premier seuil, on se retrouve dans la configuration décrite dans le paragraphe précédent.

Il est décrit ci-après de manière plus précise le dispositif de l'invention. On a représenté au sein de la figure 5 une vue schématique globale de la cartouche de surcharge (20), constituant l'un des éléments-clé du dispositif de l'invention, et au sein de laquelle interviennent les organes de couplage (9, 10). Cette cartouche de surcharge (20) est amovible, en ce sens qu'il est possible de l'interchanger avec une autre cartouche pourvue d'autres caractéristiques, notamment en termes de seuils de détection de surcharge. Elle est de fait pourvue de moyens d'accouplement, en l'espèce (22) sur le cabestan (3) et sur l'arbre moteur émanant du moteur (6) (non représenté). On a également représenté sur cette figure un pignon denté (23), destiné à coopérer avec le dispositif de freinage (12) du tambour de levage ou cabestan (3), et les dents (45) du ratchet (13), dont la fonction sera décrite ultérieurement.

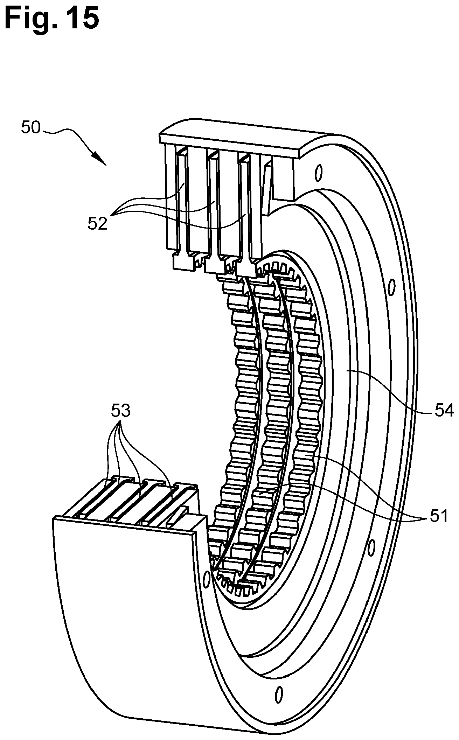

Typiquement, le pignon denté (23) est apte à venir s'engrener dans une couronne dentée (51) de forme et dimension appropriées, ménagée à l'intérieur du dispositif de freinage (50), décrit plus en détail au sein de la figure 15.

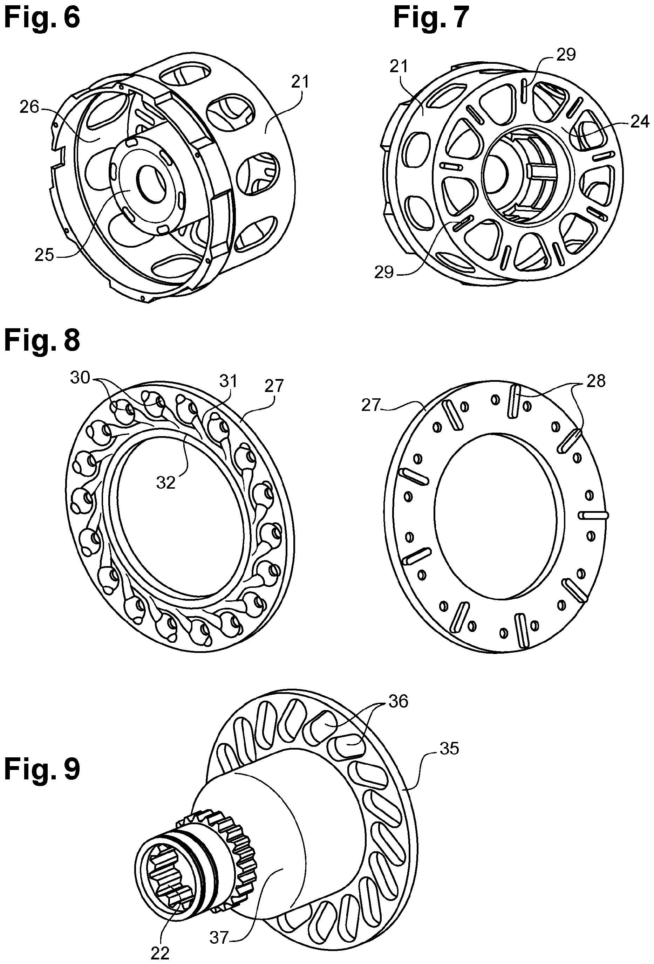

Cette cartouche (20) est dans les faits constituée d'une cloche (21), typiquement métallique, de section transversale circulaire, et présentant une symétrie de révolution, telle qu'on peut l'observer sur les figures 6 et 7. La cloche (21) présente un fond (24), en l'espèce ajouré, duquel émane une saillie centrale cylindrique (25) au sein de laquelle est logé l'extrémité de l'arbre émanant du moteur électrique (6) assurant la rotation du tambour de levage ou du cabestan (3). La cloche présente, en position opposée au fond (24), une ouverture (26), destinée à permettre l'introduction des différents éléments constitutifs du dispositif de l'invention au sein de la cloche (21).

Le fond (24) de la cloche (21) est destiné à recevoir une première couronne annulaire (27), illustrée en détail sur la figure 8. Cette couronne (27) est réversiblement solidarisée au fond de la cloche au moyen de saillies radiales (28) susceptibles d'être reçues au sein de lumières traversantes (29) ménagées au sein du fond (24) de manière correspondante, tant en positionnement qu'en dimensions.

L'autre face de la première couronne (27) est pourvue de logements (30) de forme globalement tronconique, ménagés de manière périodique au voisinage de la périphérie de ladite couronne. Chacun de ces logements (30) communique au moyen d'une rampe inclinée (31) avec une gorge ou piste annulaire (32), positionnée au voisinage du diamètre interne de ladite couronne, et de profondeur inférieure à celle des logements (30). La fonction de ces différents éléments sera décrite ultérieurement. Les logements (30) sont destinés à recevoir chacun une bille (33) réalisée en un matériau de dureté élevée, et typiquement en acier.

Ladite première couronne (27) est destinée à coopérer avec une seconde couronne (35), illustrée par exemple sur la figure 9, solidaire d'un organe (37) apte à venir sur un élément de forme correspondante, pour assurer la rotation du tambour de levage ou cabestan (3).

Cette coopération résulte de la présence au sein de ladite seconde couronne (35) de lumières traversantes (36), en forme d'hippodrome, orientées de manière oblique par rapport à la direction radiale, situées à l'aplomb de la zone active de la première couronne, c'est-à-dire de la zone comportant les logements (30) et la gorge annulaire (32). La largeur de ces lumières traversantes (36) est légèrement supérieure au diamètre des billes (33), de telle sorte que les billes peuvent être reçues dans ces lumières.

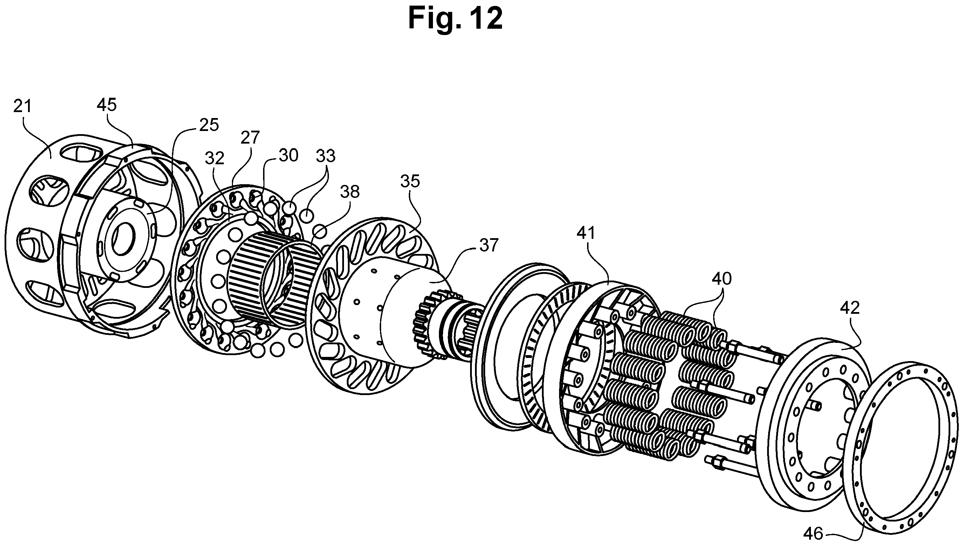

La figure 12 illustre en perspective éclatée les différents éléments constitutifs de cette cartouche de surcharge. Apparaissent ainsi au sein de cette figure, notamment les deux couronnes respectives (27, 35) destinées à coopérer l'une avec l'autre, et dont le principe de fonctionnement sera décrit en détail ultérieurement.

Parallèlement, l'organe (37) auquel est solidarisée la seconde couronne (35) peut tourner librement, aux contraintes extérieures près, autour de la zone en saillie (25) de la cloche (21), un roulement à aiguilles (38) étant interposé entre les deux.

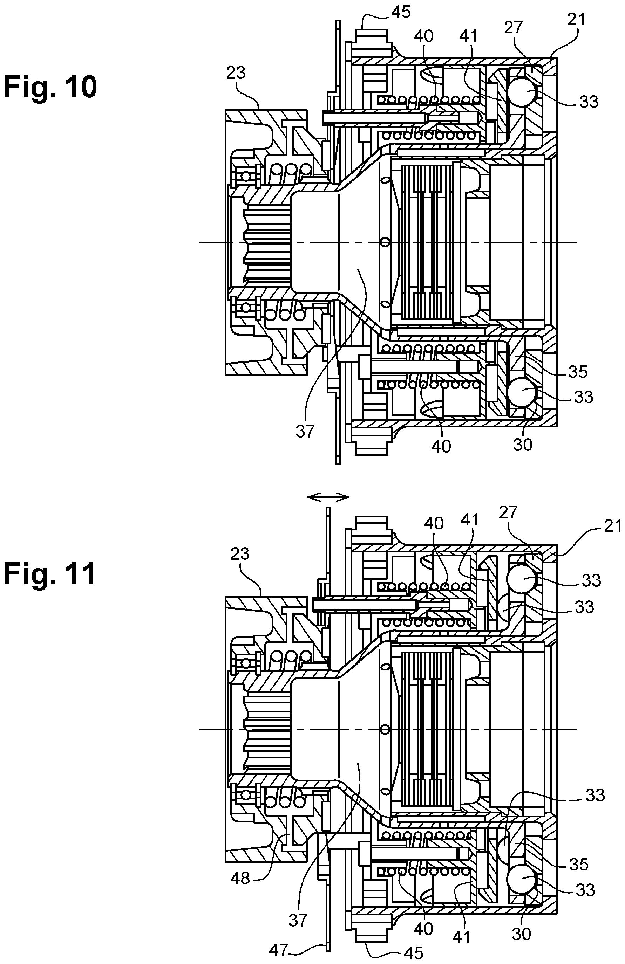

Par ailleurs, le premier seuil de déclenchement de surcharge évoqué précédemment est assuré mécaniquement, au moyen d'une pluralité de ressorts (40), emprisonnés dans une cage définie par deux plaques antagonistes (41) et (42), coaxiales avec la cloche (21) et les couronnes (27, 35). L'une (41) desdites plaques de la cage vient en appui contre les billes (33) (voir figures 10 et 11), et l'autre plaque (42) est solidarisée au rebord supérieur libre de ladite cloche au moyen d'une bride annulaire (46), constituant ce faisant point d'application fixe des ressorts (40).

On a ainsi illustré au sein des figures 10 et 11, la cartouche de surcharge, respectivement en position de fonctionnement normal, c'est-à-dire dans laquelle la rotation de l'arbre moteur engendre la rotation du cabestan, et en position de désaccouplement, engendrant la rotation en mode roue libre dudit cabestan par rapport au moteur (3).

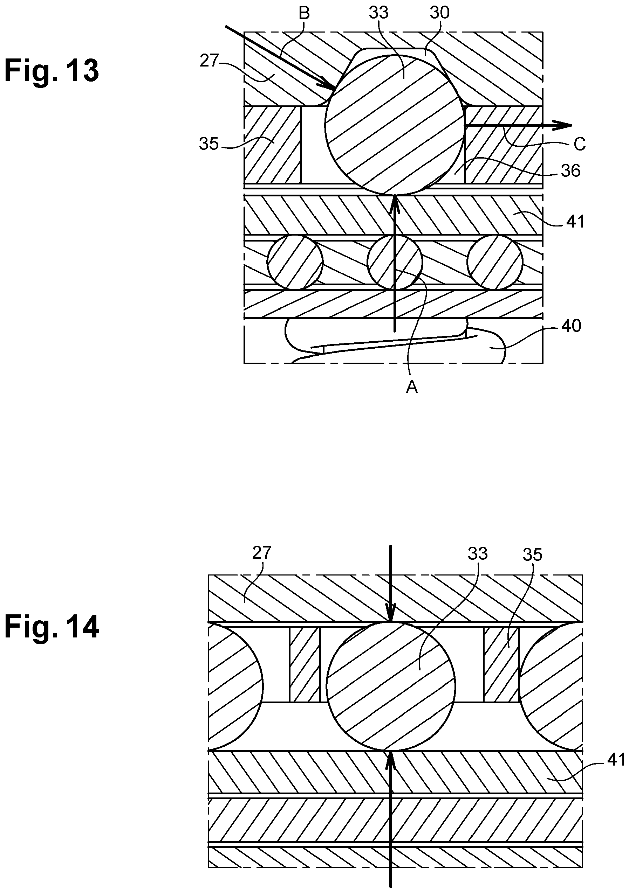

Les figures 13 et 14 illustrent ce fonctionnement. En figure 13, correspondant au mode de fonctionnement normal, c'est-à-dire dans lequel il y a accouplement effectif entre l'arbre moteur et le cabestan, les billes (33) sont présentes dans les logements (30) de la première couronne (27), et corollairement coopèrent via les lumières traversantes (36) ménagées au sein de la seconde couronne (35) avec cette dernière. On a illustré par trois flèches A, B et C les composantes respectives d'action des ressorts (40) s'exerçant sur les billes (33), et de la coopération entre les billes (33) avec la seconde couronne (35), décomposée en une composante tangentielle et une composante radiale. Le couple s'exerçant sur le cabestan en raison de la charge (5) se traduit par une force inférieure selon la direction radiale à celle exercée par les ressorts (40), de sorte que les deux couronnes sont accouplées.

Lorsque le couple en question augmente, notamment en raison d'une surcharge, et plus particulièrement lorsqu'il excède une valeur seuil déterminée (le premier seuil) par la constante de raideur résultant de l'action des ressorts (40) (figure 14), la composante radiale résultant dudit couple devient supérieure en valeur à l'action exercée par les ressorts (40), induisant la sortie des billes (33) hors de leur logement respectif tronconique (30) et leur déplacement en direction de la gorge annulaire interne (32), de sorte qu'en raison de la profondeur moindre de ladite gorge (32) par rapport au diamètre des billes, ces dernières engendrent le déplacement axial de la plaque (41) et corollairement du plateau (47). Les billes (33) alors présentent au sein de la gorge annulaire interne (32), constituant alors un roulement à billes, permettent la rotation en mode roue libre de l'ensemble des deux couronnes (27, 35) par rapport à l'ensemble (40 - 42), et de fait, le fonctionnement du cabestan (3) en mode roue libre par rapport à l'arbre moteur, et donc le libre déroulement du câble (4).

Ce déplacement relatif axial de la plaque (41) combinée à la compression des ressorts (40) engendre également le déplacement selon la même direction d'un plateau (47), et corollairement d'un système d'embrayage (48), liant alors mécaniquement le pignon denté (23) et l'organe de couplage (37).

De la sorte, en raison de la coopération du pignon (23) avec le dispositif de freinage (50), solidarisé au bâti de l'organe de levage, et constitué de disques de friction (52) interposés entre des contre-disques (53), on assure le freinage de la rotation du tambour de levage ou cabestan (3). Son action est déterminée par le serrage desdits disques, typiquement assuré par un système de type Belleville (54) voire un système de ressorts favorisant la redondance, bien connu pour cette application. La force maximum de freinage constitue ledit second seuil de l'invention.

Après action de ce dispositif de freinage, dont il convient de rappeler qu'il intervient après détection d'une surcharge, et donc après mise en libre rotation du tambour de levage ou cabestan, la vitesse de rotation dudit cabestan est ralentie, et corollairement, comme le couple exercé sur ledit cabestan est drastiquement réduit, justement en raison de la libre rotation, le réaccouplement des couronnes (27) et (35) est tenté. Cette tentative réussit si la vitesse de rotation de l'arbre moteur est supérieure à celle du tambour de levage ou cabestan, engendrant, en raison de la forme et de l'inclinaison des lumières traversantes (36) de la seconde couronne (35) le retour des billes (33) dans leur logement respectif (30).

Si en revanche, la vitesse de rotation de l'arbre moteur demeure inférieure à celle du tambour de levage ou cabestan (3), en raison de la persistance de la surcharge, on se retrouve dans la situation décrite ci-dessus, et de nouveau, le plateau (47) engendre l'action du dispositif de freinage (12), pour tenter une nouvelle fois le ralentissement voire l'arrêt de la rotation du cabestan (3).

Selon l'invention, une roue à rochets « ratchet, » illustré par la référence (45) sur les figures 5 et 10 - 12, est activé lorsque l'interrupteur (11) est lui-même activé, c'est-à-dire dans le cas de la détection d'une surcharge supérieure ou égale audit premier seuil. Ce ratchet a pour vocation d'arrêter le moteur (6).

Corollairement, un organe de type ratchet (14) est également activé après détection de la surcharge par l'interrupteur (11). Ce ratchet (14) agit sur les freins (15) du tambour de stockage (7), dans le cas d'un treuil à cabestan, de sorte que ledit tambour peut poursuivre sa rotation, afin de conserver la tension suffisante du brin de câble (16) séparant le cabestan (3) du tambour de stockage (7), même en cas de fonctionnement du cabestan (3) en mode roue libre.

Selon une caractéristique de l'invention, le dispositif de freinage (50) est également susceptible de se présenter sous la forme d'un élément amovible. Ce faisant, en modifiant les caractéristiques des organes qui le constituent, il est possible de modifier ses caractéristiques de freinage, et donc corollairement, ledit second seuil.

On conçoit dès lors, d'une part, que les deux seuils caractéristiques de l'invention sont complètement indépendants l'un de l'autre, et qu'il est possible, en raison du caractère amovible, respectivement de la cartouche (20) et de l'élément amovible (50), de régler le fonctionnement général du treuil indépendamment l'un de l'autre.

## Revendications

1. Procédé de protection d'un organe de levage contre une surcharge, l'organe de levage comprenant un tambour de levage (3) sur lequel vient s'enrouler un câble (4) à l'extrémité duquel est fixée une charge (5), ledit tambour de levage (3) étant lié mécaniquement à un moteur électrique (6) apte à assurer sa rotation, la liaison mécanique comprenant un embrayage ou dispositif équivalent, ***caractérisé* en ce que** ledit procédé comprend au moins deux seuils distincts de fonctionnement :
▪ un premier seuil, dont le dépassement engendre le fonctionnement en roue libre du tambour de levage (3) par rapport à la chaine cinématique émanant du moteur électrique (6) ;
▪ un second seuil, de valeur supérieure à celle correspondant à la charge nominale de l'organe de levage, mais de valeur inférieure à celle du premier seuil, engendrant le freinage de la rotation du tambour de levage (3) et une tentative d'arrêt progressif de ladite rotation du tambour.

2. Procédé de protection d'un organe de levage contre une surcharge selon la revendication 1, comprenant en outre, dans le cas du dépassement dudit premier seuil, une étape consistant à tenter le réaccouplement du tambour de levage sur la chaine cinématique intervenant selon une périodicité déterminée.

3. Procédé de protection d'un organe de levage contre une surcharge selon la revendication 2, dans lequel la périodicité déterminée est inférieure à 5 secondes.

4. Procédé de protection d'un organe de levage contre une surcharge dans lequel le tambour de levage appartient à un système à cabestan (3) associé à un tambour de stockage (7), selon l'une des revendications 1 à 3, procédé dans lequel le dépassement dudit premier seuil engendre le freinage de la rotation du tambour de stockage, afin de conserver une tension minimum du câble s'étendant entre le cabestan (3) et le tambour de stockage (7).

5. Dispositif de protection d'un organe de levage contre une surcharge, ledit organe de levage comprenant :
▪ un tambour de levage (3) sur lequel vient s'enrouler un câble de levage (4) à l'extrémité duquel est fixée une charge (5) ;
▪ un moteur (6) muni d'un arbre rotatif apte à assurer la rotation du tambour de levage (3) ;
▪ un embrayage ou dispositif équivalent (20) monté sur la liaison mécanique reliant le moteur (6) au tambour de levage (3) et apte à découpler le moteur du tambour ;
dans lequel
▪ l'embrayage ou dispositif équivalent est pourvu d'éléments aptes à assurer la libre rotation du tambour de levage (3) par rapport à l'arbre moteur dès lors que le couple exercé par le câble (4) sur ledit tambour de levage (3) est supérieur à une valeur seuil prédéterminée, dite premier seuil ;
▪ **caractérisé en ce que** le moteur est électrique et **en ce que** le dispositif de protection comprend également des moyens de freinage (23, 50) de la rotation du tambour de levage, dont les capacités maximum de freinage constituent un second seuil, de valeur supérieure à celle correspondant à la charge nominale de l'organe de levage, mais de valeur inférieure à celle du premier seuil.

6. Dispositif de protection d'un organe de levage contre une surcharge selon la revendication 5, ***caractérisé* en ce que** l'embrayage ou dispositif équivalent est constitué d'une cartouche (20), dite de surcharge, susceptible d'être couplée respectivement à l'arbre moteur du moteur électrique (6) et au tambour de levage (3), ladite cartouche étant constituée d'une cloche (21) recevant deux couronnes (27, 35) indépendantes l'une de l'autre, mais coopérant l'une avec l'autre par l'intermédiaire d'une pluralité de billes (33) reçues dans des logements (30) de forme adaptée ménagés au sein de l'une (27) desdites couronnes, et faisant saillie hors desdits logements (30) afin d'être également reçues dans des lumières traversantes (36) ménagées au sein de l'autre couronne (35), l'une (27) desdites couronnes étant solidarisée à la cloche (21), elle-même connectée mécaniquement à l'arbre moteur du moteur (6), et l'autre couronne (35) étant solidarisée à un moyen (37) apte à entraîner en rotation le tambour de levage (3), des ressorts (40) associés à un organe de coopération avec les moyens de freinage (50), exerçant une pression sur les billes (33).

7. Dispositif de protection d'un organe de levage contre une surcharge selon la revendication 6, ***caractérisé* en ce que** les logements (30) ménagés au sein de l'une (27) des couronnes et destinés à recevoir les billes (33), communiquent avec une gorge annulaire interne (32) ménagée au sein de ladite couronne (27), de profondeur inférieure auxdits logements, cette communication étant réalisée au moyen de rampes non radiales (31).

8. Dispositif de protection d'un organe de levage contre une surcharge selon l'une des revendications 6 et 7, ***caractérisé* en ce que** la cartouche (20) est amovible.

9. Dispositif de protection d'un organe de levage contre une surcharge selon l'une des revendications 5 à 8, ***caractérisé* en ce que** les moyens de freinage (23, 50) de la rotation du tambour de levage (3) sont constitués de disques à friction (52) solidaires de l'organe de levage, et coopérant avec un pignon denté (23) embrayé sur l'axe de rotation dudit tambour de levage (3) en cas de dépassement dudit premier seuil.

10. Dispositif de protection d'un organe de levage contre une surcharge selon la revendication 9, ***caractérisé* en ce que** les moyens de freinage (50) sont amovibles.

11. Dispositif de protection d'un organe de levage contre une surcharge selon l'une des revendications 5 à 10, dans lequel le tambour de levage (3) est un cabestan, associé à un tambour de stockage (7) mû en rotation par un moteur électrique (8), ***caractérisé* en ce que** le dispositif comprend en outre une roue à rochet ou ratchet (14), activée après dépassement dudit premier seuil, et destinée à agir sur les freins (15) associés audit du tambour de stockage (7), de sorte que ledit tambour poursuive sa rotation, afin de conserver la tension suffisante du brin de câble (16) séparant le cabestan (3) du tambour de stockage (7), même en cas de fonctionnement du cabestan (3) en mode roue libre.

## Patentansprüche

1. Verfahren zum Schutz eines Hebeorgans vor Überlastung, wobei das Hebeorgan eine Hebetrommel (3) umfasst, auf der ein Seil (4) aufgewickelt wird, an dessen Ende eine Last (5) befestigt ist, wobei die Hebetrommel (3) mechanisch mit einem Elektromotor (6) verbunden ist, der geeignet ist, ihre Drehung zu gewährleisten, wobei die mechanische Verbindung eine Kupplung oder eine gleichwertige Vorrichtung umfasst, ***dadurch gekennzeichnet,* dass** das Verfahren mindestens zwei unterschiedliche betriebliche Schwellenwerte umfasst:
▪ einen ersten Schwellenwert, dessen Überschreitung zum Leerlaufbetrieb der Hebetrommel (3) in Bezug auf die kinematische Kette führt, die vom Elektromotor (6) ausgeht;
▪ einen zweiten Schwellenwert, dessen Wert höher ist als der Wert der Nennlast des Hebeorgans, dessen Wert jedoch unter dem ersten Schwellenwert liegt, der die Drehung der Hebetrommel (3) abbremst und zu einem Versuch führt, die Drehung der Trommel schrittweise anzuhalten.

2. Verfahren zum Schutz eines Hebeorgans vor einer Überlastung nach Anspruch 1, das bei Überschreitung des ersten Schwellenwerts außerdem einen Schritt umfasst, der darin besteht, zu versuchen, die Hebetrommel wieder an die kinematische Kette anzukoppeln, die in einer bestimmten Periodizität eingreift.

3. Verfahren zum Schutz eines Hebeorgans vor Überlastung nach Anspruch 2, wobei die festgelegte Periodizität unter 5 Sekunden liegt.

4. Verfahren zum Schutz eines Hebeorgans vor Überlastung, bei dem die Hebetrommel zu einem Spillwindensystem (3) gehört, das mit einer Speichertrommel (7) verbunden ist, nach einem der Ansprüche 1 bis 3, ein Verfahren, bei dem die Überschreitung des ersten Schwellenwerts zum Abbremsen der Drehung der Speichertrommel führt, um eine Mindestspannung des Seils, das zwischen der Spillwinde (3) und der Speichertrommel (7) verläuft, beizubehalten.

5. Vorrichtung zum Schutz eines Hebeorgans vor Überlastung, wobei das Hebeorgan Folgendes umfasst:
▪ eine Hebetrommel (3), auf der ein Hebeseil (4) aufgewickelt wird, an dessen Ende eine Last (5) befestigt ist;
▪ einen Motor (6), der mit einer drehbaren Welle versehen ist, die geeignet ist, die Drehung der Hebetrommel (3) zu gewährleisten;
▪ eine Kupplung oder eine gleichwertige Vorrichtung (20), die an der mechanischen Verbindung zwischen dem Motor (6) und der Hebetrommel (3) angebracht ist und den Motor von der Trommel abkoppeln kann;
in der
▪ die Kupplung oder gleichwertige Vorrichtung mit Elementen versehen ist, die geeignet sind, die freie Drehung der Hebetrommel (3) in Bezug auf die Antriebswelle zu gewährleisten, sobald das vom Seil (4) auf die Hebetrommel (3) ausgeübte Drehmoment über einem vorbestimmten Schwellenwert liegt, der als erster Schwellenwert bezeichnet wird;
▪ **dadurch gekennzeichnet, dass** der Motor elektrisch ist und dass die Schutzvorrichtung auch Mittel zum Bremsen (23, 50) der Drehung der Hebetrommel umfasst, deren maximale Bremskapazitäten einen zweiten Schwellenwert bilden, dessen Wert über dem Wert der Nennlast des Hebeorgans, jedoch unter dem ersten Schwellenwert liegt.

6. Vorrichtung zum Schutz eines Hebeorgans gegen Überlastung nach Anspruch 5, ***dadurch gekennzeichnet,* dass** die Kupplung oder äquivalente Vorrichtung aus einer Patrone (20), der sogenannten Überlastpatrone, besteht, die jeweils mit der Antriebswelle des Elektromotors (6) und der Hebetrommel (3) gekoppelt werden kann, wobei die Patrone aus einer Glocke (21) besteht, die zwei Kränze (27, 35) aufnimmt, die zwar voneinander unabhängig sind, jedoch über eine Vielzahl von Kugeln (33) zusammenwirken, welche in Aufnahmen (30) in angepasster Form aufgenommen werden, die in einem (27) der Kränze ausgebildet sind, und aus den Aufnahmen (30) herausragen, damit sie ebenfalls in Durchgangsschlitzen (36) aufgenommen werden, die in dem anderen Kranz (35) angeordnet sind, wobei einer (27) der Kränze fest mit der Glocke (21) verbunden ist, die ihrerseits mechanisch mit der Antriebswelle des Motors (6) verbunden ist, und der andere Kranz (35) fest mit einem Mittel (37) verbunden ist, das geeignet ist, die Hebetrommel (3) in Drehung zu versetzen, wobei Federn (40), die einem Kooperationsorgan mit den Bremsmitteln (50) zugeordnet sind, einen Druck auf die Kugeln (33) ausüben.

7. Vorrichtung zum Schutz eines Hebeorgans gegen eine Überlastung nach Anspruch 6, ***dadurch gekennzeichnet,* dass** die Aufnahmen (30), die im Inneren eines (27) der Kränze ausgebildet sind und dazu bestimmt sind, die Kugeln (33) aufzunehmen, mit einer inneren Ringnut (32) in Verbindung stehen, die im Kranz (27) ausgebildet ist und eine geringere Tiefe als die Aufnahmen aufweist, wobei diese Verbindung durch nicht-radiale Rampen (31) hergestellt wird.

8. Vorrichtung zum Schutz eines Hebeorgans vor Überlastung nach einem der Ansprüche 6 oder 7, ***dadurch gekennzeichnet,* dass** die Patrone (20) herausnehmbar ist.

9. Vorrichtung zum Schutz eines Hebeorgans gegen eine Überlastung nach einem der Ansprüche 5 bis 8, ***dadurch gekennzeichnet,* dass** die Bremsmittel (23, 50) für die Drehung der Hebetrommel (3) aus Reibscheiben (52) bestehen, die fest mit dem Hebeorgan verbunden sind und mit einem Zahnrad (23) zusammenwirken, das bei Überschreiten des ersten Schwellenwerts in die Drehachse der Hebetrommel (3) eingekuppelt wird.

10. Vorrichtung zum Schutz eines Hebeorgans vor Überlastung nach Anspruch 9, ***dadurch gekennzeichnet,* dass** die Bremsmittel (50) abnehmbar sind.

11. Vorrichtung zum Schutz eines Hebeorgans vor Überlastung nach einem der Ansprüche 5 und 10, bei der die Hebetrommel (3) eine Spillwinde ist, die mit einer Speichertrommel (7) verbunden ist, die durch einen Elektromotor (8) in Drehung versetzt wird, ***dadurch gekennzeichnet,* dass** die Vorrichtung außerdem ein Klinkenrad oder Ratsche (14) umfasst, das/die nach Überschreiten des ersten Schwellenwerts aktiviert wird und dazu bestimmt ist, auf die Bremsen (15) einzuwirken, die mit der Speichertrommel (7) verbunden sind, sodass die Trommel ihre Drehung fortsetzt, um die ausreichende Spannung des Seilstrangs (16), der die Spillwinde (3) von der Speichertrommel (7) trennt, auch im Fall des Betriebs der Spillwinde (3) im Leerlaufbetrieb aufrechtzuerhalten.

## Claims

1. A method for protecting a lifting member against an overload, the lifting member comprising a lifting drum (3) on which a cable (4) is wound, at the end of which a load (5)is fixed, said lifting drum (3) being mechanically connected to an electric motor capable (6) of ensuring its rotation, the mechanical connection comprising a clutch or equivalent device, ***wherein*** said method comprises at least two distinct operating thresholds:
▪ a first threshold, the exceeding of which generates a freewheel operation of the lifting drum (3) with respect to a kinematic chain coming from the electric motor (6);
▪ a second threshold, of a value greater than that corresponding to a nominal load of the lifting member, but of a value less than that of the first threshold, generating a braking of the rotation of the lifting drum (3) and an attempt to progressively stop said rotation of the drum.

2. The method for protecting a lifting member against an overload according to claim 1, further comprising, in the case of a exceeding of said first threshold, a step consisting of attempting the re-coupling of the lifting drum on the kinematic chain intervening according to a determined periodicity.

3. The method for protecting a lifting member against an overload according to claim 2, wherein the determined periodicity is less than 5 seconds.

4. The method for protecting a lifting member against an overload wherein the lifting drum belongs to a capstan system (3) associated with a storage drum (7), according to one of claims 1 to 3, method wherein the exceeding of said first threshold generates the braking of the rotation of the storage drum, in order to preserve a minimum strain of the cable extending between the capstan (3) and the storage drum (7).

5. A device for protecting a lifting member against an overload, said lifting member comprising:
▪ a lifting drum (3) on which a lifting cable (4) is wound, at the end of which a load (5) is fixed;
▪ a motor (6) provided with a rotary shaft capable of ensuring a rotation of the lifting drum (3);
▪ a clutch or equivalent device (20) mounted on the mechanical connection connecting the motor (6) to the lifting drum (3) and capable of uncoupling the motor from the drum;
wherein the clutch or equivalent device is provided with elements capable of ensuring a free rotation of the lifting drum (3) with respect to the rotary shaft of the motor as soon as a torque exerted by the cable (4) on said lifting drum (3) is greater than a predetermined threshold value, called first threshold;
**characterized in that** the motor is an electric motor and **in that** the protection device also comprises braking means (23, 50) of the rotation of the lifting drum, the maximum braking capacities of which constitute a second threshold, of a value greater than that corresponding to the nominal load of the lifting member, but of a value less than that of the first threshold.

6. The device for protecting a lifting member against an overload according to claim 5, ***wherein*** the clutch or equivalent device is constituted of a cartridge (20), called overload cartridge, which can be coupled respectively to the motor shaft of the electric motor (6) and to the lifting drum (3), said cartridge being constituted of a dome (21) receiving two rings (27, 35), independent from one another, but engaging with the other by way of a plurality of balls (33) received in housings (30) of suitable shape provided within one (27) of said rings, and projecting outside of said housings (30) in order to also be received in through spaces (36) provided within the other ring (35), one (27) of said rings being integral with the dome (21), itself mechanically connected to the motor shaft of the motor (6), and the other ring (35) being integral with a means (37) capable of rotating the lifting drum (3), springs (40) associated with an engagement member with the braking means (50) exerting a pressure on the balls (33).

7. The device for protecting a lifting member against an overload according to claim 6, ***wherein*** the housings (30) provided within one (27) of the rings and intended to receive the balls (33), communicate with an internal annular recess (32) provided within said ring (27), of depth less than said housings, this communication being made by means of non-radial ramps (31).

8. The device for protecting a lifting member against an overload according to one of claims 6 and 7, ***wherein*** the cartridge (20) is removable.

9. The device for protecting a lifting member against an overload according to one of claims 5 to 8, ***wherein*** the braking means (23, 50) of the rotation of the lifting drum (3) are constituted of friction discs (52) integral with the lifting member, and engaging with a toothed pinion (23) clutched on the axis of rotation of said lifting drum (3) in case of exceeding said first threshold.

10. The device for protecting a lifting member against an overload according to claim 9, ***wherein*** the braking means (50) are removable.

11. The device for protecting a lifting member against an overload according to one of claims 5 to 10, wherein the lifting drum (3) is a capstan associated with a storage drum (7) moved in rotation by an electric motor (8), ***wherein*** the device further comprises a ratchet wheel (14) activated after exceeding said first threshold, and intended to act on the brakes (15) associated with said storage drum (7) such that said drum continues its rotation, in order to preserve a sufficient strain of a cable strand (16) separating the capstan (3) from the storage drum (7), even in case of operation of the capstan (3) in freewheel mode.
